(19) **Europäisches Patentamt**

**European Patent Office**

**Office européen des brevets**

(11) **EP 1 106 872 B1**

(12) **FASCICULE DE BREVET EUROPEEN**

(45) Date de publication et mention
de la délivrance du brevet:
**05.04.2006 Bulletin 2006/14**

(51) Int Cl.:
*F16H 61/02* *(2006.01)*

(21) Numéro de dépôt: **00403369.2**

(22) Date de dépôt: **01.12.2000**

(54) **Procédé de commande d'une transmission automatique en fonction du profil de la route**

Steuerungsverfahren für ein Automatgetriebe mit Berücksichtigung der Fahrbahnneigung

Method of controlling an automatic transmission according to road slope

(84) Etats contractants désignés:
**DE ES GB IT**

(30) Priorité: **03.12.1999 FR 9915250**

(43) Date de publication de la demande:
**13.06.2001 Bulletin 2001/24**

(73) Titulaires:
• **Renault s.a.s.**
**92100 Boulogne Billancourt (FR)**
• **Peugeot Citroen Automobiles**
**92200 Neuilly Sur Seine (FR)**

(72) Inventeurs:
• **Taffin, Christian**
**92380 Garches (FR)**

• **Baize, Thierry**
**75017 Paris (FR)**

(74) Mandataire: **Rougemont, Bernard**
**RENAULT TECHNOCENTRE**
**Département Propriété Intellectuelle**
**Sce 00267 TCR GRA 2 36**
**1, avenue de Golf**
**78288 Guyancourt cedex (FR)**

(56) Documents cités:
| | |
|---|---|
| EP-A- 0 471 102 | EP-A- 1 041 314 |
| WO-A- 95/34437 | DE-A- 4 020 201 |
| DE-A- 4 112 577 | DE-A- 19 708 528 |
| GB-A- 2 315 303 | US-A- 5 434 780 |

**Description**

La présente invention se rapporte à la commande des transmissions automatiques, notamment de véhicules routiers.

Elle s'applique à la commande des transmissions automatiques du type comportant en sortie du moteur un convertisseur de couple associé à un mécanisme de changement de vitesses, par exemple à train épicycloïdal.

Sa mise en oeuvre dans un calculateur électronique de transmission automatique, permet d'adapter la commande de la transmission au profil de la route.

Le procédé de commande proposé repose sur une mesure du couple moteur, sur une estimation de la pente de la route, et sur la comparaison de cette estimation avec une ou plusieurs valeurs de seuil, de façon à imposer à la transmission au moins une première loi de passage adaptée aux montées ou au moins une seconde loi de passage adaptée aux autres profils de route, selon les résultats de cette comparaison.

Dans les systèmes de commande connus, l'unité de contrôle de la transmission élabore elle même le signal de couple moteur, à partir d'une cartographie établie en fonction de l'angle d'ouverture du papillon des gaz (dans le cas d'un moteur à essence), et du régime moteur.

Cette méthode classique ne donne qu'une estimation imprécise du profil de la route, notamment en raison des dispersions introduites au niveau de l'information couple prise en compte. De plus, avec les pédales d'accélération « électriques », l'information angle d'ouverture papillon n'est plus du tout représentative du niveau de couple délivré par le moteur, et l'estimation du couple basée sur une cartographie perd également toute représentativité.

Par ailleurs, les travaux de mise au point préalables à tout calcul de couple moteur par exploitation d'une cartographie, sont relativement longs et fastidieux, car il est nécessaire d'ajuster précisément chaque point de la cartographie, en fonction de pertes, généralement mal connues.

Enfin, en phase de mise au point, toute modification des caractéristiques de réglage de l'unité de contrôle du moteur nécessite un ajustement des caractéristiques de réglage de contrôle de la transmission.

L'élaboration de l'information couple moteur au sein du calculateur d'une boîte de vitesses automatique pose donc un certain nombre de difficultés, pénalisant fortement l'exploitation de cette information dans l'adaptation de la commande au profil de la route.

L'invention vise à surmonter ces difficultés, et à optimiser la prise en compte du profil de la route dans la commande d'une transmission automatique.

Dans le document DE-A-41.12.577, il est décrit une méthode de calcul de l'angle d'inclinaison de la route sur la base d'un calcul du couple de sortie de la transmission réalisé sur l'unité de contrôle de la transmission. Une telle disposition ne permet pas de tenir compte de manière efficace de l'influence du convertisseur, quand un tel dispositif est inséré entre le moteur et la transmission proprement dite. Un procédé de commande comprenant toutes les caractéristiques du préambule de la revendication 1 est connu du document DE- A-197 08 528.>

L'invention propose propose que l'unité de contrôle de la transmission exploite un signal de couple élaboré préalablement par l'unité de contrôle moteur du véhicule, pour déterminer l'ensemble des efforts résistants appliqués au véhicule, et pour adapter les décisions de changement de rapport au profil de la route, en choisissant par exemple entre des lois de passages « normales », et des lois de passages spécialement adaptées aux montées. Selon un mode de réalisation particulier de l'invention, la somme des efforts résistants appliqués au véhicule, ou pente équivalente de la route, est fonction du couple appliqué aux roues, de la masse du véhicule, du rayon moyen des roues, de la vitesse de déplacement du véhicule, et de son accélération.

Selon l'invention, le couple aux roues est notamment calculé en fonction du couple turbine entrant dans le mécanisme de changement de vitesses, et du couple perdu au sein de ce mécanisme, au point de fonctionnement considéré.

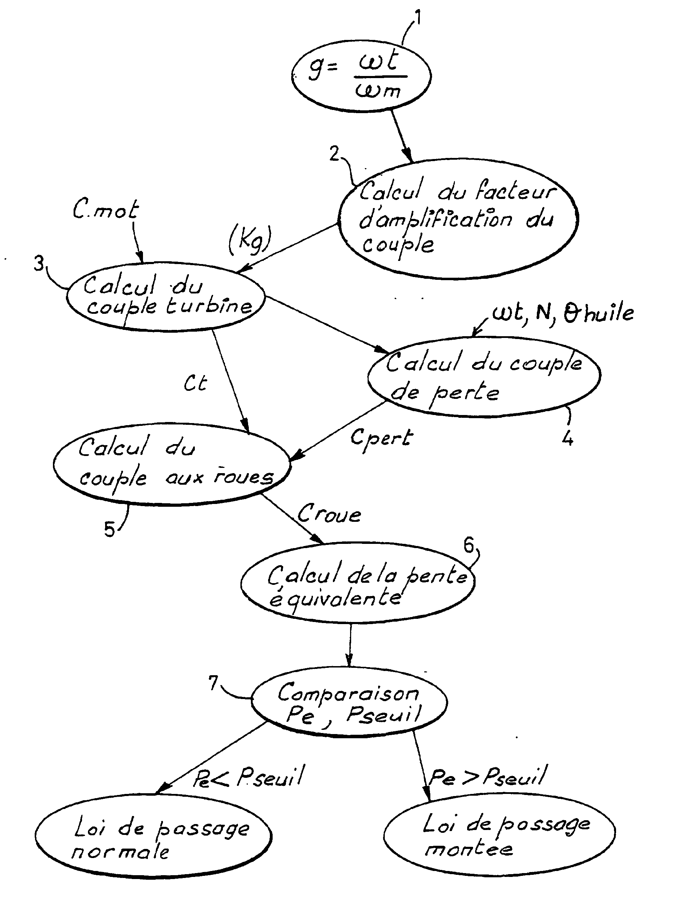

D'autres caractéristiques et avantages de la présente invention apparaîtront clairement à la lecture de la description suivante d'un mode de réalisation particulier de celle-ci, en liaison avec le dessin annexé, dont la figure unique illustre la mise en oeuvre.

Sur la figure, la première donnée relative à la transmission qui est mentionnée, est le glissement du convertisseur g, obtenu en faisant le rapport du régime turbine $\omega_t$ (régime de sortie du convertisseur ou régime d'entrée du mécanisme de changement de vitesses), sur le régime moteur $\omega_m$ (régime d'entrée dans le convertisseur) (étape de calcul 1).

A partir du glissement g, l'unité de commande de la transmission détermine, sur la base d'une cartographie traduisant les caractéristiques de fonctionnement du convertisseur, un facteur K(g) d'amplification du couple moteur dans le convertisseur, fonction de g (étape 2).

Le facteur K(g) et la valeur du couple moteur $C_m$, transmise par l'unité de contrôle du moteur, permettent à l'unité de contrôle de la transmission, de calculer le couple délivré par la turbine du convertisseur, ou couple d'entrée dans le mécanisme de changement de vitesses $C_t$ (étape 3).

$C_t$ est exploité, pour calculer le couple de perte $C_{pert}$ de la transmission automatique au point de fonctionnement considéré (étape 4). Ce calcul s'effectue par exemple à partir de relevés sur bancs, et sur la base du couple turbine $C_t$,

du régime turbine $\omega_t$, du rapport sélectionné par la transmission N, de la température d'huile de la boîte $\theta_{huile}$,... etc.

La valeur de $C_{pert}$ = f($C_t$, $\omega_t$, N, $\theta_{huile}$....) ainsi calculée, et le couple turbine $C_t$, sont exploités conjointement dans l'étape 5, pour calculer le couple à la roue $C_{roue}$ de la façon suivante :

$$C_{roue} = [C_t - C_{pert}].rap(N),$$

rap(N) étant le rapport de démultiplication rapporté à la roue sur le rapport N.

Il est alors possible de déterminer les efforts résistants du véhicule, ou la pente équivalente $P_e$, de la façon suivante (étape 6) avec gp, constante de pesanteur :

$$P_e = [C_{roue}/r - \tfrac{1}{2}\, \rho.S_{cx}.V^2 - M.g_p.k_r] / [M(N).g_p] - [\gamma_{mes}/g_p],$$

expression dans laquelle :

- M est la masse du véhicule,
- M(N) est la masse du véhicule rapportée au rapport N, en tenant compte des inerties de la transmission en fonction du rapport N et de celles des roues,
- r est le rayon moyen des roues,
- V la vitesse de déplacement du véhicule,
- $\gamma$mes est issue de la vitesse V par dérivation, soit Ymes = dV/dt,
- $S_{cx}$ est le coefficient de pénétration dans l'air du véhicule,
- p est la densité de l'air,
- $k_r$ est la résistance au roulement.

Enfin, la valeur de l'équivalente $P_e$ ainsi calculée est comparée à un seuil de pente préétabli $P_{seuil}$ (étape 7), de façon à imposer une loi de passage adaptée aux montées, dite loi de « montée » si $P_e > P_{seuil}$, et d'autres lois de passage de vitesses « normales », adaptées aux autres profils de route, si $P_e < P_{seuil}$. L'invention n'est cependant pas limitée au cas d'une transmission disposant d'une seule loi de montée, et elle s'applique de façon analogue à toute transmission disposant de plusieurs lois de montée, en prévoyant par exemple de comparer la pente équivalente à différents seuils étagés de façon appropriée.

Comme indiqué ci-dessus, la masse du véhicule M(N) est différenciée selon le rapport N de la transmission, de façon à tenir compte des inerties de rotation de l'ensemble de la transmission, ainsi que de celles des roues, sur chaque rapport.

Par ailleurs, il faut noter que le calcul des efforts résistants, ou pente équivalente de la route, tient compte des pertes internes du mécanisme de changement de vitesses, qui sont fonction du couple d'entrée dans celle-ci (couple turbine $C_t$), de son régime d'entrée ($\omega_t$), du rapport engagé N, et de la température d'huile $\theta_{huile}$ du mécanisme. En effet, il est nécessaire de prendre en compte ces pertes, qui peuvent représenter de 5 à 20% du couple d'entrée, et pourraient donc altérer dans de grandes proportions la détermination des efforts résistants, si elles étaient négligées.

**Revendications**

1. Procédé de commande d'une transmission automatique du type comportant en sortie du moteur un convertisseur de couple associé à un mécanisme de changement de vitesses, en fonction du profil de la route, reposant sur une mesure du couple moteur $C_m$, sur une estimation de la pente $P_e$, et sur la comparaison de cette estimation avec au moins une valeur de seuil $P_{seuil}$, de façon à imposer à la transmission au moins une première loi de passage adaptée aux montées si $P_e > P_{seuil}$ et au moins une seconde loi de passage adaptée aux autres profils de route si $P_e < P_{seuil}$; **caractérisé en ce que** le calcul de la pente de la route $P_e$ est effectué dans le calculateur de la transmission en fonction du couple appliqué aux roues du véhicule $C_{roue}$, qui est calculé en fonction d'une part d'une valeur de couple turbine $C_t$ entrant dans le mécanisme de changement de vitesses qui dépend d'une mesure du couple moteur $C_m$ effectuée par l'unité de contrôle du moteur et transmise à l'unité de contrôle de la transmission, et d'autre part du couple de perte $C_{pert}$ dudit mécanisme au point de fonctionnement considéré.

2. Procédé de commande selon la revendication 1, **caractérisé en ce que** la pente équivalente de la route $P_e$ est

aussi fonction de la masse du véhicule M(N), du rayon moyen des roues r, de la vitesse de déplacement du véhicule V, et de son accélération $\gamma$mes.

3. Procédé de commande selon la revendication 2, **caractérisé en ce que** le couple de perte $C_{pert}$ est calculé en fonction du couple turbine $C_t$, du régime turbine $\omega_t$, et du rapport engagé N.

4. Procédé de commande selon la revendication 1,2 ou 3, **caractérisé en ce que** l'unité de contrôle de la transmission détermine le couple turbine $C_t$ en multipliant le couple moteur $C_m$ par un coefficient d'amplification K(g) du convertisseur fonction du glissement g de celui-ci.

5. Procédé de commande selon la revendication 4, **caractérisé en ce que** le facteur d'amplification K(g) est déterminé par cartographie.

6. Procédé de commande selon la revendication 3, 4 ou 5, **caractérisé en ce que** le couple de perte $C_{pert}$ tient compte de la température d'huile $\theta_{huile}$ du mécanisme.

7. Procédé de commande selon l'une des revendications 2 à 6, **caractérisé en ce que** la masse M(N) est la masse du véhicule rapportée au rapport engagé N, en tenant compte des inerties de la transmission sur ce rapport, et de celles des roues.

8. Procédé de commande selon l'une des revendications 2 à 7, **caractérisé en ce que** la pente équivalente $P_e$ tient compte du coefficient de pénétration dans l'air $S_{cx}$ du véhicule, de la densité de l'air p, et d'un coefficient de résistance au roulement $k_r$.

9. Procédé de commande selon l'une des revendications 2 à 9, **caractérisé en ce que** la pente équivalente $P_e$ est égale à

$$1/M(N).g\ [C_{roue}/r - \tfrac{1}{2}\ \rho.S_{cx}.V^2 - M.g.k_r] - \gamma_{mes}/g],$$

expression dans laquelle :

- M est la masse du véhicule,
- M(N) est la masse du véhicule rapportée au rapport N, en tenant compte des inerties de la transmission en fonction du rapport N et de celles des roues,
- r est le rayon moyen des roues,
- V la vitesse de déplacement du véhicule,
- $\gamma_{mes}$ est issue de la vitesse V par dérivation, soit $\gamma_{mes}$ = dV/dt,
- $S_{cx}$ est le coefficient de pénétration dans l'air du véhicule,
- $\rho$ est la densité de l'air,
- $k_r$ est la résistance au roulement.

**Claims**

1. A control method for an automatic transmission of the type comprising, as output from the engine, a torque converter associated with a gear change mechanism, as a function of the road profile, based on a measurement of the engine torque $C_m$, an estimate of the gradient $P_c$ and a comparison of this estimate with at least one threshold value $P_{threshold}$ so as to impose on the transmission at least a first transition law adapted to uphill travel if $P_c > P_{threshold}$ and at least a second transition law adapted to the other road profiles if $P_c < P_{threshold}$, **characterised in that** the calculation of the gradient of the road $P_e$ is carried out in the transmission computer as a function of the torque applied to the vehicle wheels $C_{wheel}$ which is calculated as a function of a turbine torque value $C_t$ entering the gear change mechanism which depends on a measurement of the engine torque $C_m$ carried out by the engine control unit and transmitted to the transmission control unit, and as a function of the loss torque $C_{loss}$ of the mechanism at the point of operation in question.

2. A control method as claimed in claim 1, **characterised in that** the equivalent gradient of the road $P_e$ is also a

function of the mass of the vehicle M(N), the mean radius of the wheels r, the speed of travel of the vehicle V and its acceleration γmes.

3. A control method as claimed in claim 2, **characterised in that** the loss torque $C_{loss}$ is calculated as a function of the turbine torque $C_t$, the turbine speed $\omega_t$ and the ratio engaged N.

4. A control method as claimed in claim 1, 2 or 3, **characterised in that** the transmission control unit calculates the turbine torque $C_t$ by multiplying the engine torque $C_m$ by an amplification coefficient K(g) of the converter which is a function of the slippage g thereof.

5. A control method as claimed in claim 4, **characterised in that** the amplification coefficient K(g) is calculated by mapping.

6. A control method as claimed in claim 3, 4 or 5, **characterised in that** the loss torque $C_{loss}$ takes account of the oil temperature $\theta_{oil}$ of the mechanism.

7. A control method as claimed in one of claims 2 to 6, **characterised in that** the mass M(N) is the vehicle mass related to the ratio engaged N, taking account of the transmission inertia at this ratio and of the inertia of the wheels.

8. A control method ad claimed in one of claims 2 to 7, **characterised in that** the equivalent gradient $P_e$ takes account of the coefficient of air penetration $S_{cx}$ of the vehicle, the air density $\rho$ and a coeffcient of drive resistance $k_r$.

9. A control method as claimed in one of claims 2 to 9, **characterised in that** the equivalent gradient $P_c$ is equal to

$$1/M(N).g\ [C_{wheel}/r - \tfrac{1}{2}\,\rho.S_{cx}.V^2 - M.g.k_r]\ /\ [M(N).g_p] - [\gamma_{mes}/g],$$

in which expression:

- M is the mass of the vehicle.
- M(N) is the mass of the vehicle related to the ratio N, taking account of the transmission inertia as a function of the ratio N and of that of the wheels,
- r is the mean radius of the wheels,
- V is the speed of travel of the vehicle,
- $\gamma_{mes}$ results from the speed V by derivation, i.e. $\gamma_{mes} = dV/dt$,
- $S_{cx}$ is the air penetration coefficient of the vehicle,
- $\rho$ is the air density,
- $k_r$ is the drive resistance.

**Patentansprüche**

1. Steuerungsverfahren eines Automatikgetriebes vom Typ, welcher am Ausgang des Motors einen Drehmomentwandler umfasst, der einem Gangwechselmechanismus zugeordnet ist, in Abhängigkeit des Straßenprofils, welches auf einer Messung des Motordrehmomentes $C_m$, auf der Abschätzung der Neigung $P_e$ und auf dem Vergleich dieser Abschätzung mit mindestens einem Grenzwert $P_{grenz}$ beruht, um so dem Getriebe wenigstens eine erste, an die Steigungen angepasste Kennlinie zuzuweisen, wenn $P_e > P_{grenz}$ und wenigstens eine zweite, an die anderen Straßenprofile angepasste Kennlinie, wenn $P_e < P_{grenz}$, **dadurch gekennzeichnet, dass** die Berechnung der Neigung der Straße $P_e$ im Getrieberechner in Abhängigkeit des auf die Räder des Fahrzeuges angewandten Drehmoments $C_{rad}$ durchgeführt wird, welches in Abhängigkeit einerseits eines an den Gangwechselmechanismus ansetzenden Turbinendrehmomentwertes $C_t$ berechnet wird, welcher von einer durch die Motorsteuereinheit durchgeführte und an die Getriebesteuereinheit übertragene Messung des Motordrehmoments $C_m$ abhängt, und andererseits in Abhängigkeit des Verlustdrehmoments $C_{verlust}$ des Mechanismus beim betrachteten Betriebspunkt.

2. Steuerungsverfahren nach Anspruch 1, **dadurch gekennzeichnet, dass** die äquivalente Straßenneigung $P_e$ auch eine Funktion der Fahrzeugmasse M(N), des Durchschnittsradius der Räder r, der Fortbewegungsgeschwindigkeit des Fahrzeuges V und dessen Beschleunigung $\gamma_{mes}$ ist.

3. Steuerungsverfahren nach Anspruch 2, **dadurch gekennzeichnet, dass** das Verlustdrehmoment $C_{verlust}$ in Abhängigkeit des Turbinendrehmomentes $C_t$, der Turbinendrehzahl $\omega_t$ und des eingelegten Ganges N berechnet wird.

4. Steuerungsverfahren nach einem der Ansprüche 1, 2 oder 3, **dadurch gekennzeichnet, dass** die Getriebesteuereinheit das Turbinendrehmoment $C_t$ bestimmt, in dem es das Motordrehmoment $C_m$ mit einem Verstärkungskoeffizienten K(g) des Wandlers multipliziert, welcher eine Funktion von dessen Schlupf g ist.

5. Steuerungsverfahren nach Anspruch 4, **dadurch gekennzeichnet, dass** der Verstärkungsfaktor K(g) durch Kennfeldmessung bestimmt wird.

6. Steuerungsverfahren nach Anspruch 3, 4 oder 5, **dadurch gekennzeichnet, dass** das Verlustdrehmoment $C_{verlust}$ die Öltemperatur $\theta_{\ddot{O}l}$ des Mechanismus berücksichtigt.

7. Steuerungsverfahren nach einem der Ansprüche 2 bis 6, **dadurch gekennzeichnet, dass** die Masse M(N) die Fahrzeugmasse in Bezug zum eingelegten Gang N, unter Berücksichtigung der Trägheiten des Getriebes bei diesem Gang und derjenigen der Räder ist.

8. Steuerungsverfahren nach einem der Ansprüche 2 bis 7, **dadurch gekennzeichnet, dass** die äquivalente Neigung $P_e$ den Lufteindringkoeffizienten $S_{cx}$ des Fahrzeuges, die Luftdichte p und einen Rollwiderstandskoeffizienten $k_r$ berücksichtigt.

9. Steuerungsverfahren nach einem der Ansprüche 2 bis 9, **dadurch gekennzeichnet, dass** die äquivalente Neigung $P_e$ mit

$$1/M(N) * g \left[ C_{rad}/r - 1/2 * \rho * S_{cx} * V^2 - M * g * k_r \right] - \gamma_{mes}/g]$$

gleich ist, ein Ausdruck bei welchem:

- M die Fahrzeugmasse ist,
- M(N) die Fahrzeugmasse in Bezug zum Gang N ist, unter Berücksichtigung der Trägheiten des Getriebes in Abhängigkeit zum Gang N und derjenigen der Räder,
- r der Durchschnittsradius der Räder ist,
- V die Fortbewegungsgeschwindigkeit des Fahrzeuges ist,
- $\gamma_{mes}$ der Geschwindigkeit V durch Ableitung entspringt, d.h. $\gamma_{mes} = dV/dt$,
- $S_{cx}$ der Lufteindringkoeffizient des Fahrzeuges ist,
- $\rho$ die Luftdichte ist,
- $k_r$ der Rollwiderstand ist.

$$g = \frac{\omega t}{\omega m}$$  1

2  Calcul du facteur d'amplification du couple

C.mot

(Kg)

3  Calcul du couple turbine

ωt, N, θhuile

Calcul du couple de perte

Ct

4

Calcul du couple aux roues

Cpert

5

Croue

Calcul de la pente équivalente  6

7  Comparaison Pe , Pseuil

Pe < Pseuil

Pe > Pseuil

Loi de passage normale

Loi de passage montee